# EUROPEAN PATENT APPLICATION

(11) **EP 4 430 970 A1**
(43) Date of publication of application: **18.09.2024**
(21) Application number: 22891984.1
(22) Date of filing: 08.11.2022
(51) Int. Cl.: A24F 40/42, A24F 40/40, A24F 40/46

(54) **ATOMIZATION DEVICE, LIQUID STORAGE DEVICE, AND ATOMIZATION ASSEMBLY**

(30) Priority: 12.11.2021 CN 202111340237
(71) Applicant: Shenzhen First Union Technology Co., Ltd., Shenzhen, Guangdong 518000 (CN)
(72) Inventor: HUANG, Zhijie, Shenzhen, Guangdong 518000 (CN); LU, Linhai, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2022/130687
(87) International publication number: WO 2023/083190

(57) **Abstract**

An atomization device (100), a liquid storage device (10), and an atomization assembly (20). The atomization device (100) includes: a liquid storage device (10), which has a liquid storage cavity (13), a liquid outlet, and a first seal for sealing the liquid outlet; and an atomization assembly (20), which is detachably connected to the liquid storage device (10) and includes a support (23), an atomization core (25), and a second seal (22) supported on the support (23), where the atomization core (25) is used for atomizing a liquid matrix to generate an aerosol; and the support (23) is provided with a liquid inlet for allowing the liquid matrix to flow towards the atomization core (25) and provided with a pressing member (233), the pressing member (233) is configured to be able to press the first seal to break or release the first seal, to enable the liquid matrix to flow from the liquid outlet to the liquid inlet, and the second seal (22) is used for sealing a joint between the liquid outlet and the liquid inlet during the pressing of the first seal by the pressing member (233). Through the arrangement mentioned above, during the pressing of the first seal by the pressing member (233), the liquid matrix does not leak out of a gap at the joint between the liquid outlet and the liquid inlet.

## Description

### CROSS-REFERENCE TO RELATED APPLICATIONS

This application claims priority to Chinese Patent Application No. 202111340237.0, filed with the China National Intellectual Property Administration on November 12, 2021 and entitled "ATOMIZATION DEVICE, LIQUID STORAGE DEVICE, AND ATOMIZATION ASSEMBLY", which is incorporated herein by reference in its entirety.

### TECHNICAL FIELD

Embodiments of the present invention relate to the field of electronic atomization technologies, and in particular, to an atomization device, a liquid storage device, and an atomization assembly.

### BACKGROUND

Since electronic atomization apparatuses do not contain harmful components such as tar and suspended particles in cigarettes, electronic atomization apparatuses are used more and more. When the electronic atomization apparatus is in use, liquid in the atomization apparatus flows from a liquid storage cavity to an atomization core in an atomization device to be atomized to generate smoke, to imitate real smoke.

At present, the liquid storage cavity and the atomization assembly of the electronic atomization apparatus are generally of an integrated structure, and the e-liquid is usually in constant contact with the atomization core, which is likely to cause damage to the atomization core and shorten the service life of the atomization core. In addition, the long-term contact of the e-liquid with the atomization core will easily lead to leakage of the e-liquid, which greatly degrades the user experience.

In the prior art, there has been a method of separating the e-liquid from the core (that is, the atomization core is separated from or not in contact with the e-liquid) to resolve such problems. For example, as an example of the prior art, Patent No. CN201420372002.9 provides an atomization apparatus which can separate the e-liquid from the core. The atomization apparatus includes an atomization sleeve and an atomization assembly located in the atomization sleeve. An e-liquid storage cup for storing e-liquid is detachably mounted in the atomization sleeve. One end of the e-liquid storage cup is provided with a sealing structure for sealing the e-liquid, and a piercing structure suitable for piercing the sealing structure when the e-liquid storage cup is pushed in to allow the e-liquid to enter the atomization assembly is further arranged in the atomization sleeve. However, in the process of realizing the present invention, the inventor found that the prior art has at least the following technical problem: in the process of piercing the sealing structure, part of the e-liquid will leak out.

### SUMMARY

In view of the foregoing technical problems, embodiments of the present invention provide an atomization device, a liquid storage device, and an atomization assembly, to overcome the foregoing problems or at least partially resolve the foregoing problems. The atomization device includes:
An atomization device includes:
a liquid storage device, where the liquid storage device has a liquid storage cavity used for storing a liquid matrix and a liquid outlet allowing the liquid matrix to flow out, the liquid storage device includes a first seal, and the first seal is used for sealing the liquid outlet; and
an atomization assembly, which is detachably connected to the liquid storage device, where the atomization assembly includes a support, an atomization core, and a second seal supported on the support, and the atomization core is used for atomizing the liquid matrix to generate an aerosol; and
the support is provided with a liquid inlet for allowing the liquid matrix to flow towards the atomization core and provided with a pressing member adjacent to the liquid inlet, the pressing member is configured to be able to press the first seal to break or release the first seal, to enable the liquid matrix to flow from the liquid outlet to the liquid inlet, and the second seal is used for sealing a joint between the liquid outlet and the liquid inlet during the pressing of the first seal by the pressing member.

In one of the embodiments, at least one part of the second seal is configured to surround the pressing member.

In one of the embodiments, a first liquid guide hole used for connecting the liquid outlet to the liquid inlet is defined on the second seal, and a hole wall of the first liquid guide hole surrounds the pressing member.

In one of the embodiments, the liquid inlet includes at least one second liquid guide hole defined and formed on the support, and the pressing member is at least partially positioned in the second liquid guide hole.

In one of the embodiments, the pressing member at least partially extends in the second liquid guide hole toward the liquid storage device.

In one of the embodiments, the pressing member is at least partially bound to an inner wall of the second liquid guide hole.

In one of the embodiments, a circulation path of the liquid matrix is defined and formed between the pressing member and an inner wall of the second liquid guide hole.

In one of the embodiments, the liquid inlet includes at least one second liquid guide hole, and the second liquid guide hole is defined in the pressing member to form a circulation path of the liquid matrix.

In one of the embodiments, an accommodating cavity is defined on the support, the liquid inlet is connected to the accommodating cavity, and the atomization core is at least partially accommodated in the accommodating cavity.

In one of the embodiments, the atomization core includes a porous body and a heating element, the heating element is bound to the porous body, the porous body is used for absorbing the liquid matrix, and the heating element is used for heating the liquid matrix to generate the aerosol.

In one of the embodiments, the liquid storage device includes a connection end arranged opposite to the atomization assembly, and at least one liquid outlet pipe for forming the liquid outlet extends from an end face of the connection end.

In one of the embodiments, the first seal includes a thin film used for sealing a port of the liquid outlet pipe.

In one of the embodiments, the first seal includes a plug at least partially accommodated in the liquid outlet pipe.

In one of the embodiments, the liquid outlet pipe is used for being able to be inserted into the liquid inlet and being able to accommodate at least one part of the pressing member when the liquid storage device is connected to the atomization assembly.

In one of the embodiments, the liquid storage device further includes an air conduit that extends from the end face of the connection end and that is used for guiding the aerosol to flow through.

In one of the embodiments, a first liquid guide hole used for connecting the liquid outlet to the liquid inlet is defined on the second seal, a hole diameter of the first liquid guide hole is less than a pipe diameter of the liquid outlet pipe, and the second seal is flexible.

In one of the embodiments, the first seal has a first position and a second position relative to the atomization assembly;
when the first seal is in the first position, the first seal seals the liquid outlet; and
when the first seal is in the second position, the pressing member presses the first seal, to break or release the first seal and then cause the liquid matrix to flow from the liquid outlet towards the liquid inlet.

An embodiment of this application further provides a liquid storage device, adapted to be detachably connected to an atomization assembly, where the liquid storage device includes a liquid storage cavity used for storing a liquid matrix and a connection end arranged opposite to the atomization assembly, at least one liquid outlet pipe extends from an end face of the connection end, the liquid outlet pipe has a liquid outlet used for allowing the liquid matrix to flow out, and the liquid storage device further includes a first seal used for sealing the liquid outlet; and
the first seal is configured to be able to be pressed by a part of the atomization assembly and be broken or released, and then the liquid matrix is caused to flow out from the liquid outlet.

An embodiment of this application further provides an atomization assembly, adapted to be detachably connected to a liquid storage device, where the atomization assembly includes a support, an atomization core, and a second seal supported on the support, and the atomization core is used for atomizing the liquid matrix from the liquid storage device to generate an aerosol; and
the support is provided with a liquid inlet for allowing the liquid matrix to flow towards the atomization core and provided with a pressing member adjacent to the liquid inlet, the pressing member is configured to be able to press the first seal to break or release the first seal, to enable the liquid matrix to flow from the liquid outlet to the liquid inlet, and the second seal is used for sealing a joint between the liquid outlet and the liquid inlet during the pressing of the first seal by the pressing member.

One of the foregoing technical solutions of this application has the following technical effects:
In the atomization device provided in the embodiments of this application, the second seal is arranged on the atomization assembly, and when the liquid storage device is connected to the atomization assembly, the pressing member of the atomization assembly provides a pressing force for the first seal of the liquid storage device, to break or release the first seal, so that the liquid matrix in the liquid storage device flows from the liquid outlet of the liquid storage device towards the liquid inlet of the atomization assembly; and the second seal seals the joint between the liquid outlet and the liquid inlet, to seal a gap at the joint between the liquid outlet and the liquid inlet, so that the liquid matrix cannot leak out during unsealing of the first seal.

### BRIEF DESCRIPTION OF THE DRAWINGS

One or more embodiments are exemplarily described with reference to the corresponding accompanying drawings, and the descriptions are not to be construed as limiting the embodiments. Elements in the accompanying drawings that have same reference numerals are represented as similar elements, and unless otherwise particularly stated, the figures in the accompanying drawings are not drawn to scale.
FIG. 1 is a schematic three-dimensional diagram in a direction of an atomization device according to an embodiment of the present invention;
FIG. 2 is a schematic exploded diagram from a perspective of an atomization device in FIG. 1;
FIG. 3 is a schematic three-dimensional diagram in a direction of a liquid storage device of the atomization device in FIG. 1;
FIG. 4 is a schematic three-dimensional diagram in another direction of a liquid storage device of the atomization device in FIG. 1;
FIG. 5 is a schematic cross-sectional diagram of a liquid storage device in FIG. 2;
FIG. 6 is a schematic cross-sectional diagram of a liquid storage device in FIG. 2 in another sealing manner;
FIG. 7 is a schematic exploded diagram from another perspective of an atomization device in FIG. 1;
FIG. 8 is a schematic three-dimensional diagram in a direction of an atomization core of the atomization device in FIG. 1;
FIG. 9 is a schematic cross-sectional diagram of connecting a liquid storage device and an atomization assembly of the atomization device in FIG. 1 to each other in a first assembly position;
FIG. 10 is a schematic cross-sectional diagram of connecting a liquid storage device and an atomization assembly of the atomization device in FIG. 1 to each other in a second assembly position;
FIG. 11 is a schematic three-dimensional diagram in a direction of a support of an atomization assembly in FIG. 7;
FIG. 12 is a schematic three-dimensional diagram in a direction of an atomization device according to another embodiment of the present invention;
FIG. 13 is a schematic exploded diagram from a perspective of an atomization device in FIG. 11;
FIG. 14 is a schematic cross-sectional diagram of connecting a liquid storage device and an atomization assembly of the atomization device in FIG. 11 to each other in a first assembly position;
FIG. 15 is a schematic cross-sectional diagram of connecting a liquid storage device and an atomization assembly of the atomization device in FIG. 11 to each other in a second assembly position;
FIG. 16 is a schematic three-dimensional diagram in a direction of a flexible seal of the atomization device in FIG. 11; and

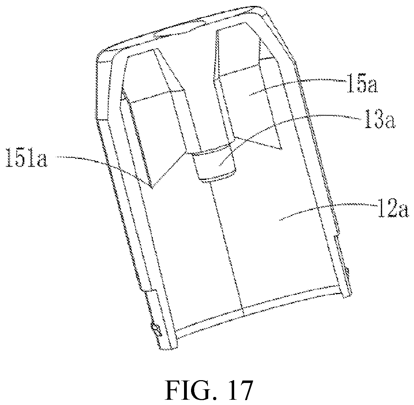

FIG. 17 is a schematic cross-sectional diagram of a liquid storage device of an atomization device in FIG. 11.

### DETAILED DESCRIPTION

For ease of understanding the present invention, the present invention is described in more detail below with reference to the accompanying drawings and specific embodiments. It should be noted that, when an element is expressed as "being fixed to" /"being fixedly connected to" another element, the element may be directly on the another element, or one or more intermediate elements may exist between the element and the another element. When an element is expressed as "being connected to" another element, the element may be directly connected to the another element, or one or more intermediate elements may exist between the element and the another element. The terms "vertical", "horizontal", "left", "right", "inner", "outside", and similar expressions used in this specification are merely used for an illustrative purpose.

Unless otherwise defined, meanings of all technical and scientific terms used in the present invention are the same as that usually understood by a person skilled in the art to which the present invention belongs. Terms used in the specification of the present invention are merely intended to describe objectives of the specific embodiment, and are not intended to limit the present invention. The term "and/or" used in this specification includes any or all combinations of one or more related listed items.

In addition, technical features involved in different embodiments of the present invention described below may be combined together if there is no conflict.

In this specification, the expression "mount" means to fix or restrict an element or an apparatus to a specific position or place in a manner including welding, screwing, snapping, bonding, and the like. The element or the apparatus may keep still at the specific position or place or move within a limited range. The element or the apparatus can be disassembled or cannot be disassembled after being fixed or restricted to the specific position or place, which is not limited in the embodiments of the present invention.

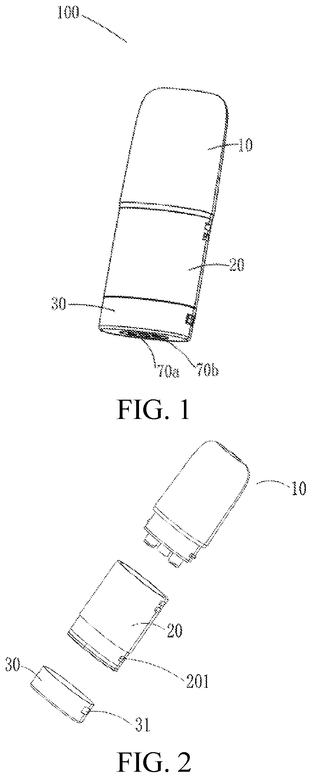

In Embodiment 1, referring to FIG. 1 and FIG. 2, FIG. 1 and FIG. 2 show a schematic three-dimensional diagram in a direction and a schematic exploded diagram from a perspective of an atomization device 100 according to Embodiment 1 of the present invention respectively. The atomization device 100 is used for being combined with a power supply mechanism (not shown) to form an electronic atomization apparatus. The atomization device 100 includes a liquid storage device 10, an atomization assembly 20, and a bottom cover 30. The atomization assembly 20 is provided with a clamping portion 201, the bottom cover 30 is correspondingly provided with a clamping groove 31 corresponding to the clamping portion 201, and the bottom cover 30 is fixedly connected to the atomization assembly 20 through clamping between the clamping groove 31 and the clamping portion 201, to prevent atomization components inside the atomization assembly 20 from falling off from the bottom. The liquid storage device 10 stores a liquid matrix that may be atomized to generate an aerosol, and the atomization device 100 includes a first electrode contact 70a and a second electrode contact 70b that are collaboratively connected to the power supply mechanism. When a user uses the atomization device 100, the power supply mechanism may provide electric energy to the atomization device 100 through the first electrode contact 22a and the second electrode contact 22b, so that the atomization device 100 may heat the liquid matrix to volatilize at least one part of ingredients of the liquid matrix to generate the aerosol that may be provided for the user.

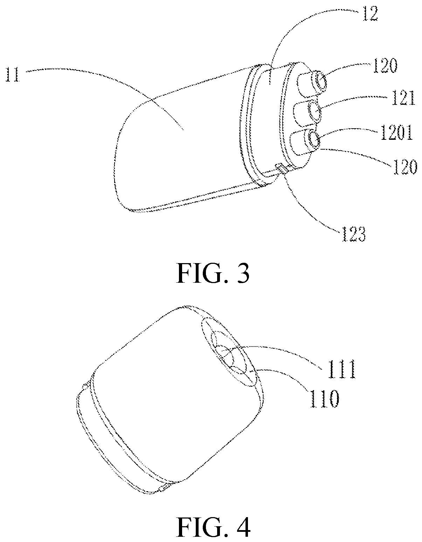

For the foregoing liquid storage device 10, continue to refer to FIG. 3 to FIG. 5. FIG. 3 to FIG. 5 show a schematic three-dimensional diagram in a direction of the liquid storage device, a schematic three-dimensional diagram in another direction of the liquid storage device, and a schematic cross-sectional diagram of the liquid storage device respectively. The liquid storage device 10 includes a first part 11 and a second part 12, and the first part 11 and the second part 12 perform enclosure to form a liquid storage cavity 13. It is easily understood that the first part 11 and the second part 12 are hermetically connected to each other, so that the liquid storage cavity 13 may store a liquid matrix that can be atomized. The top of the first part 11 is provided with a suction nozzle 110, the suction nozzle 110 is provided with a vent hole 111, and the vent hole 111 is used for providing a user of the atomization device 10 with an inhalation inlet. For ease of inhalation of the user, the vent hole 111 is provided in a middle position on the top of the first part 11.

It is worth noting that the liquid storage device 10 may alternatively not be divided into the first part 11 and the second part 12, and the liquid storage device 10 may be integrally formed, for example, may be integrally formed if each of the first part 11 and the second part 12 is made of a plastic material. In this embodiment, the first part 11 is made of a silicone material, and the second part 12 is made of a plastic material. In an aspect, because the first part 11 is made of a plastic material, manufacturing costs can be saved. In another aspect, because the suction nozzle 110 often comes into contact with a mouth of a human body, use of a silicone material can avoid generating a harmful substance for the human body.

The liquid storage device 10 is further provided with an air conduit 112, the air conduit 112 is arranged inside the liquid storage device 10 along a length direction of the liquid storage device 10, where one end is connected to the vent hole 111, and the other end extends to the second part 12. An end face of the second part 12 has a liquid outlet pipe 120 extending toward the atomization assembly 20, and the liquid outlet pipe 120 as a liquid outlet of the liquid storage device 10 is used for guiding liquid in the liquid storage device 10 into the atomization assembly 20 for atomization. At the same end of the liquid outlet pipe 120, the end face of the second part 12 further has a vent pipe 121 extending toward the atomization assembly 20, there may be two liquid outlet pipes 120 separately arranged on two sides of the vent pipe 121, and the vent pipe 121 has one end connected to the air conduit 112 in the liquid storage device 10 and the other end connected to the atomization assembly 20, so that smoke atomized by the atomization assembly 20 is transmitted to the air conduit 112 through the vent pipe 121, and then transferred to the vent hole 111 through the air conduit 112 to allow the user to inhale. The liquid outlet pipe 120 and the vent pipe 121 are configured into a pluggable hollow cylindrical shape, to facilitate plugging with the atomization assembly 20 to form a liquid guide passage and an air transmission passage.

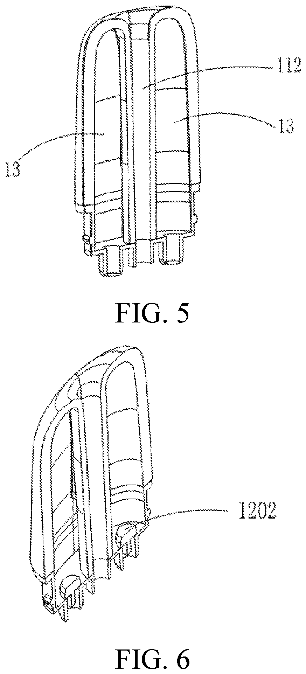

One end of the liquid outlet pipe 120 facing the atomization assembly 20 is provided with a sealing film 1201, and the sealing film 1201 as a first seal is used for sealing the liquid outlet pipe 120, thereby sealing the atomizable liquid matrix in the liquid storage cavity 13 of the liquid storage device 10. When the sealing film 1201 is broken, the liquid in the liquid storage device 10 may flow from the liquid outlet pipe 120 into the atomization assembly 20. It is easily understood that another manner may also be adopted for the first seal. As shown in FIG. 6, FIG. 6 shows another embodiment of the first seal. A liquid outlet end of the liquid outlet pipe 120 is provided with a silicone plug or rubber plug 1202, and the silicone plug or rubber plug 1202 is tightly plugged into the liquid outlet pipe 120. When the silicone plug or rubber plug 1202 is partially propped open or released under an external force action, there is a gap between the silicone plug or rubber plug 1202 and the liquid outlet pipe 120, and the liquid in the liquid storage device 10 may flow towards the atomization assembly 20 along the gap.

It is worth noting that because the liquid outlet pipe 120 of the liquid storage device 10 is sealed by the first seal, the liquid storage device 10 may independently perform storage or operating, and therefore the liquid storage device 10 is detachably connected to the atomization assembly 20. For example, when use is required, the liquid storage device 10 and the atomization assembly 20 may be assembled together; and during storage, the liquid storage device 10 and the atomization assembly 20 may be stored independently and separately, to avoid long-term contact of the liquid matrix in the liquid storage device 10 with the atomization assembly 20.

For the foregoing second part 12, continue to refer to FIG. 3. The second part 12 is provided with a snap-fit member 123, and the snap-fit member 123 is used for forming fixed connection to a snap-fit position matching the atomization assembly 20, to enable the liquid storage device 10 to be assembled to the atomization assembly 20, so that the second part 12 as a connection end connects the liquid storage device 10 to the atomization assembly 20. It is easily understood that a snap-fit position may alternatively be arranged on the second part 12, and a matching snap-fit member 123 is arranged on the atomization assembly 20.

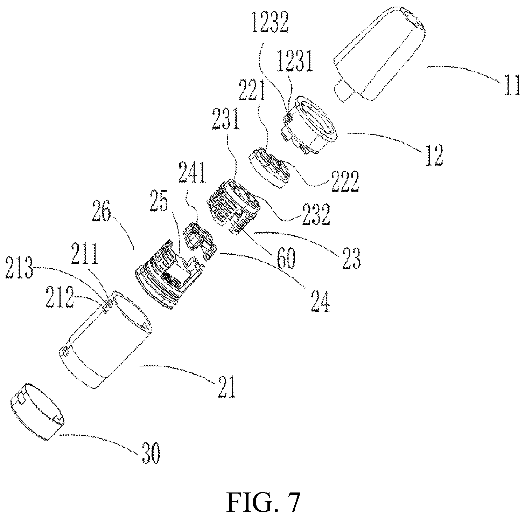

Continue to refer to FIG. 7 to FIG. 10. FIG. 7 to FIG. 10 respectively show a schematic exploded diagram from a perspective of assembling a liquid storage device 10 to an atomization assembly 20, a schematic cross-sectional diagram of a liquid storage device 10 and an atomization assembly 20 in a first assembly position, a schematic cross-sectional diagram of a liquid storage device 10 and an atomization assembly 20 in a second assembly position, and a schematic three-dimensional diagram in a direction of a support 23 of an atomization assembly 20. The atomization assembly 20 includes a shell 21, a second seal 22, a support 23, a third seal 24, an atomization core 25, and a base 26 are arranged in the shell, and the second seal 22, the support 23, the third seal 24, the atomization core 25, and the base 26 are assembled sequentially along an axial direction of the atomization assembly 20.

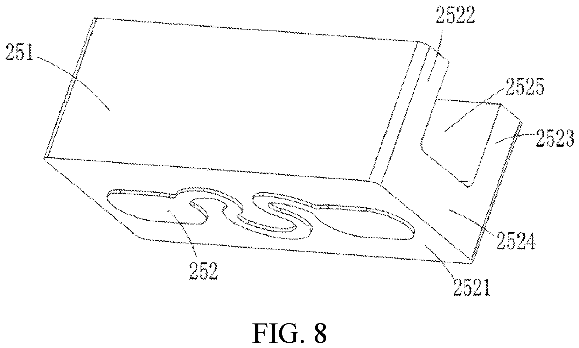

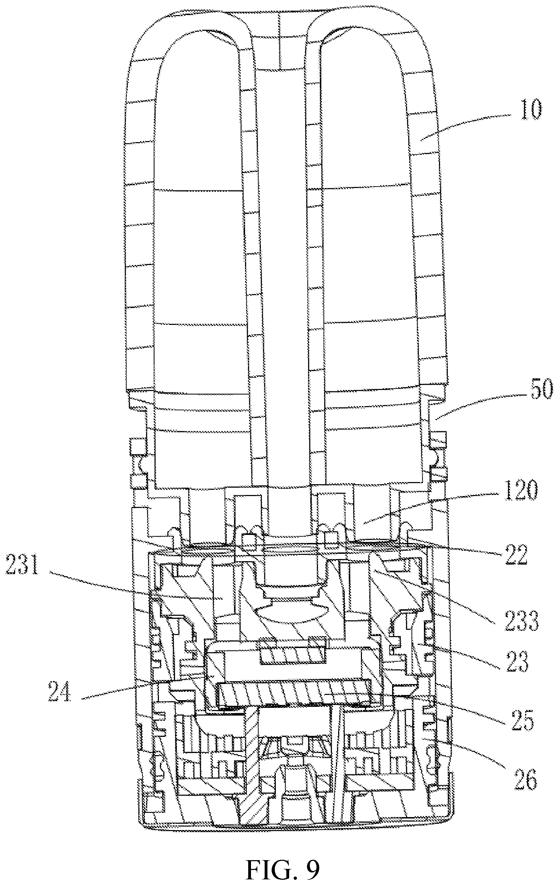

For the foregoing shell 21, the shell 21 is axially provided with a first snap-fit position 211 and a second snap-fit position 212, and the first snap-fit position 211 and the second snap-fit position 212 may be fixedly connected to the snap-fit member 123 of the liquid storage device 10. When the snap-fit member 123 is clamped to the first snap-fit position 211, the atomization assembly 20 is fixed connected to the liquid storage device 10 in the first assembly position. In this case, the atomization assembly 20 is not tightly bound to the liquid storage device 10, and there is a specific gap 50, as shown in FIG. 8. When the atomization assembly 20 moves to the second snap-fit position 212 opposite to the liquid storage device 10, the atomization assembly 20 is fixed connected to the liquid storage device 10 in the second assembly position. In this case, the atomization assembly 20 is tightly bound to the liquid storage device 10, and there is no gap, as shown in FIG. 9. It is easily understood that a fixed connection manner of the liquid storage device 10 and the atomization assembly 20 is not merely limited to the clamping manner, or may be another manner, for example, magnetically attractive connection. A magnetic member is arranged on one of the liquid storage device 10 and the atomization assembly 20, and a magnetically attractive member matching the magnetic member is arranged on the other, as long as the liquid storage device 10 is fixedly connected to the atomization assembly 20.

Further, to enable the liquid storage device 10 to move between the first assembly position and the second assembly position when being assembled in the atomization assembly 20, a sidewall of the foregoing snap-fit member 123 is further provided with a first slope 1231 and a second slope 1232, and the first slope 1231 and the second slope 1232 are arranged opposite to each other. When the snap-fit member 123 is snapped into the first snap-fit position 211, the second slope 1232 abuts against an upper end of a partition portion 213 in the middle of the first snap-fit position 211 and the second snap-fit position 212. An external force acts. For example, the user of the atomization device 100 presses the liquid storage device 10, the second slope 1232 is under a pressing force, and the liquid storage device 10 moves downward along the second slope, until the snap-fit member 123 falls into the second snap-fit position 212, thereby moving from the first assembly position to the second assembly position. Similarly, when the snap-fit member 123 is snapped into the second snap-fit position 212, the first slope 1231 abuts against a lower end of the partition portion 213 in the middle of the first snap-fit position 211 and the second snap-fit position 212. An external force acts. In this case, the external force is opposite to the foregoing external force, the liquid storage device 10 bears a pulling force for separating from the atomization assembly 20. Under this pull force, the liquid storage device 10 moves upward along the first slope, until the snap-fit member 123 falls into the first snap-fit position 211, thereby moving the second assembly position to the first assembly position.

The base 26 is fixedly connected to the support 23. In addition, the base 26 and the support 23 are fixedly connected to each other to perform enclosure to form an atomization chamber 263, and the aerosol generated by the atomization device 100 is released into the atomization chamber 263.

The atomization core 25 usually includes a capillary liquid guide element 251 used for absorbing the liquid matrix, and a heating element 252 bound to the liquid guide element, and the heating element 252 heats, when being powered on, at least part of the liquid matrix of the liquid guide element 251 to generate smoke. In an optional embodiment, the liquid guide element 251 includes flexible fiber, for example, cotton fiber, nonwoven fabric, or glass fiber strand, or includes a porous body with a micropore structure, for example, porous ceramic, is preferably porous ceramic in this embodiment, and is configured as, but not limited to, a roughly block-shaped structure. The heating element 252 may be bound to the porous body in a manner such as printing, deposition, sintering, or physical assembly, or is wound around the porous body. In another embodiment of the present invention, the atomization core 25 may alternatively atomize the liquid matrix in an ultrasonic atomization manner, and it is not necessary to atomize the liquid matrix in a heating manner.

Further, as shown in FIG. 8, the porous body 252 is arch-shaped, and has an atomization surface 2521 facing the bottom cover 30 along the axial direction of the atomization device 100. During use, the porous body 252 has a side facing away from the atomization surface 2521 in fluid connection to the liquid storage cavity 13 and then may absorb the liquid matrix, then the liquid matrix is transmitted by the micropore structure inside the porous body 252 to the atomization surface 2521 and is heated and atomized to form an aerosol, and the aerosol is released or escapes to the atomization chamber 263 from the atomization surface 2521. It may be understood that in some other embodiments, the porous body 252 may be such arranged that its atomization surface 2521 faces away from an end cover along the axial direction of the atomization device 100, thereby facing the suction nozzle 110. In this embodiment, the atomization surface 2521 extends along a cross-sectional direction of the atomization device 100.

The porous body 252 has a first sidewall 2522 and a second sidewall 2523 opposite to each other along a thickness direction, and a base part 2524 between the first sidewall 2522 and the second sidewall 2523; and the first sidewall 2522 and the second sidewall 2523 extend along a length direction, then a liquid passage 2525 is defined between the first sidewall 2522 and the second sidewall 2523, and the liquid passage 2525 in fluid connection to the liquid storage cavity 13 and then absorbs the liquid matrix.

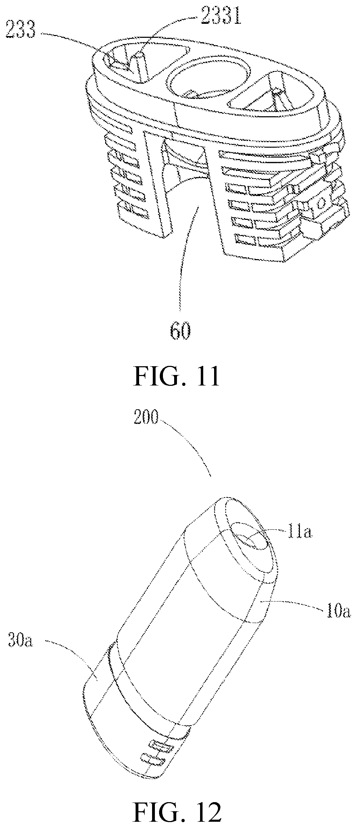

Further, as shown in FIG. 11, the support 23 maintains the atomization core 25 nested with the third seal 24. In some embodiments, the support 23 may be roughly in a shape of a ring whose lower end is an opening, an accommodating cavity 60 is defined on the support 23, and the accommodating cavity 60 is used for accommodating and maintaining the third seal 24 and the atomization core 25. In an aspect, the third seal 24 may be between the atomization core 25 and the support 23 to seal the gap between them, to prevent the liquid matrix from seeping from the gap between them. In another aspect, a case that the third seal 24 is located between the atomization core 25 and the support 23 helps the atomization core 25 be stably accommodated in the support 23 and be prevented from being released. With respect to the specific structure and shape, the third seal 24 is generally in a shape of a hollow cylinder, and the hollow inside is used for accommodating the porous body 252, and is nested outside the porous body 252 in a tight-fit manner.

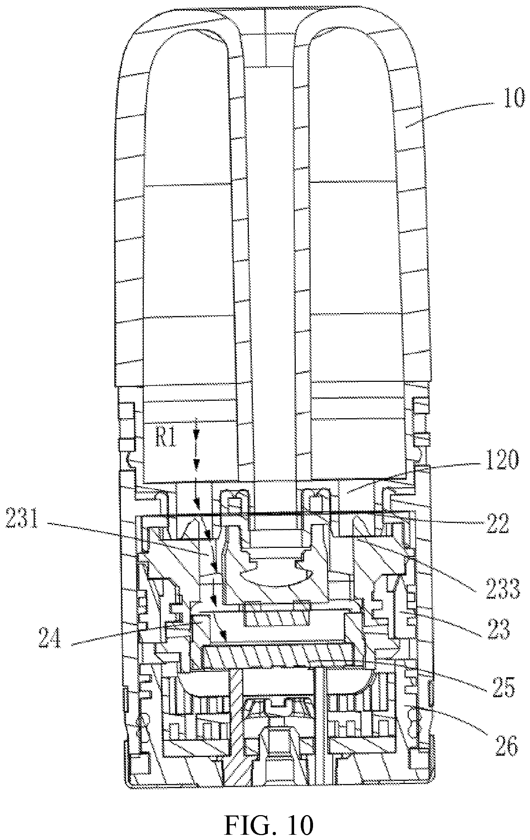

The second seal 22 is arranged between the liquid storage device 10 and the support 23, and the second seal 22 is correspondingly provided with a first liquid guide hole 221 and a first ventilation hole 222 that are docked with the liquid outlet pipe 120 and the vent pipe 121 of the liquid storage device 10. The support 23 is provided with a second liquid guide hole 231 connected to the first liquid guide hole 221, where the second liquid guide hole 231 is used as a liquid inlet through which the liquid matrix flows towards the atomization core 25; and a second ventilation hole 232 connected to the first ventilation hole 222. The liquid outlet pipe 120 and the vent pipe 121 may be inserted into the second liquid guide hole 231 and the second ventilation hole 232 respectively through the first liquid guide hole 221 and the first ventilation hole 222. In addition, the third seal 24 is provided with a third liquid guide hole 241 connected to the second liquid guide hole 231. Then, when the sealing film 1201 is broken or the silicone plug 1202 is removed, the liquid matrix in the liquid storage device 10 may flow from the liquid storage cavity 13 in the liquid storage device 10 through the liquid outlet pipe 120, the first liquid guide hole 221, the second liquid guide hole 231, the third liquid guide hole 241, and the liquid passage 2525 between the first sidewall 2522 and the second sidewall 2523 of the porous body 252 to the atomization core 25 for heating and atomization (as shown by a path R1 in FIG. 10), and smoke generated by atomization is transmitted through the second ventilation hole 232, the first ventilation hole 222, and the vent pipe 121 to the vent hole 111 of the liquid storage device and then is inhaled by the user of the atomization device 100.

It is worth noting that in this embodiment, the second seal 22 is flexible and has a specific elastic recovery force, and the hole diameter of the first liquid guide hole 221 of the second seal 22 is less than the pipe diameter of the liquid outlet pipe 120. Therefore, when the liquid outlet pipe 120 is inserted into the second liquid guide hole 231 through the first liquid guide hole 221, because the hole diameter of the first liquid guide hole 221 is less than the pipe diameter of the liquid storage pipe 120, and a pipe wall of the liquid outlet pipe 120 generates a pressing force for an inner wall of the first liquid guide hole 221, the first liquid guide hole 221 tightly wraps the pipe wall of the liquid outlet pipe 120 under the elastic recovery force, thereby sealing a gap between the outer pipe wall of the liquid outlet pipe 120 and the inner wall of the first liquid guide hole 221, that is, sealing the joint between the liquid inlet and the liquid outlet. Therefore, after the first seal is unsealed, the liquid matrix cannot leak out from the gap between the outer pipe wall of the liquid outlet pipe 120 and the inner wall of the first liquid guide hole 221 when the liquid matrix flows from the liquid outlet into the liquid inlet.

For the foregoing support 23, continue to refer to FIG. 10. The support 23 is provided with a pressing member 233 for releasing the sealing action of the seal, the pressing member 233 extends into the second liquid guide hole 231 along the length direction of the atomization device 100, may be in a shape of a sheet or a pole, and has a free end facing the first seal, and the free end is configured as a pressing end 2331 used for pressing the first seal. To help the pressing end 2331 press the seal, the pressing end 2331 is such arranged that at least one part protrudes from the second liquid guide hole 231, to facilitate pressing. In this case, the second seal 22 surrounds a protruding part of the pressing member 233, and the protruding part is surrounded by a hole wall of the first liquid guide hole 221. In addition, to cause the pressing member 233 to have sufficient strength so that the pressing member 233 can pierce or prop open the first seal, the pressing member 233 is configured to be at least partially connected to an inner wall of the second liquid guide hole 231.

The pressing member 233 and the inner wall of the second liquid guide hole 231 jointly define and form a path in which the liquid matrix circulates in the second liquid guide hole 231. In another embodiment of the present invention, the second liquid guide hole 231 may alternatively be defined and formed by the pressing member 233 itself. Specifically, a through-hole (not shown) may be provided on the pressing member 233, and the through-hole is connected to the liquid outlet pipe 120. Therefore, after the pressing member 233 presses the first seal, the liquid matrix flows through the third liquid guide hole 241 towards the atomization core 25 for atomization along the through-hole.

To sum up, because the atomization assembly 20 has the first assembly position and the second assembly position relative to the liquid storage device 10, the atomization device 100 may have such two states as a pre-assembly state and a use state. In both the pre-assembly state and the use state, the atomization assembly 20 is connected to the liquid storage device 10. When the atomization assembly 20 is connected to the liquid storage device 10 in the first assembly position, the atomization device is in the pre-assembly state; and when the atomization assembly 20 moves from the first assembly position to the second assembly position relative to the liquid storage device 10, the atomization device is in the use state.

In the pre-assembly state, that is, when the atomization assembly 20 is connected to the liquid storage device 10 in the first assembly position, the atomization assembly 20 is not tightly bound to the liquid storage device 10, and there is a specific gap 50. In this case, the pressing member 233 and the first seal are spaced apart from each other by a specific spacing, the first seal has not been broken or released, and the liquid matrix is sealed in the liquid storage cavity in the liquid storage device 10, and is separated from the atomization core 25 of the atomization assembly 20, as shown in FIG. 8. It is easily understood that in another embodiment of the present invention, in the pre-assembly state, the pressing member 233 may alternatively abut against the first seal, as long as the first seal is not unsealed in the pre-assembly state.

In the use state, that is, when the user prepares to use the atomization device 100 for inhalation, the user may apply pressure to the liquid storage device 10, so that the atomization assembly 20 moves from the first assembly position to the second assembly position under an external force relative to the liquid storage device 10. In this case, the atomization assembly 20 is tightly bound to the liquid storage device 10, and the pressing member 233 further presses the first seal, so that the first seal is broken or released, and then the liquid matrix in the liquid storage device 10 flows towards the atomization core 25 in the atomization assembly 20 for atomization.

By comparing the foregoing manner with the existing technology in which the liquid matrix in the liquid storage device 10 is in direct contact with the atomization core 25, for the atomization device 100 provided in this embodiment of the present invention, before the atomization device 100 is used for inhalation, the liquid matrix in the atomization device 100 is sealed in the liquid storage device 10 and is separated from the atomization core 25; and is unsealed and comes into contact with the atomization core 25 only during use, which greatly reduces a contact time of the liquid matrix and the atomization core 25 and can effectively prevent e-liquid from leaking.

In addition, In the atomization device provided in the embodiments of this application, the second seal is arranged on the atomization assembly, and when the liquid storage device is connected to the atomization assembly, the pressing member of the atomization assembly provides a pressing force for the first seal of the liquid storage device, to break or release the first seal, so that the liquid matrix in the liquid storage device flows from the liquid outlet of the liquid storage device towards the liquid inlet of the atomization assembly; and the second seal seals the joint between the liquid outlet and the liquid inlet, to seal a gap at the joint between the liquid outlet and the liquid inlet, so that the liquid matrix cannot leak out during unsealing of the first seal.

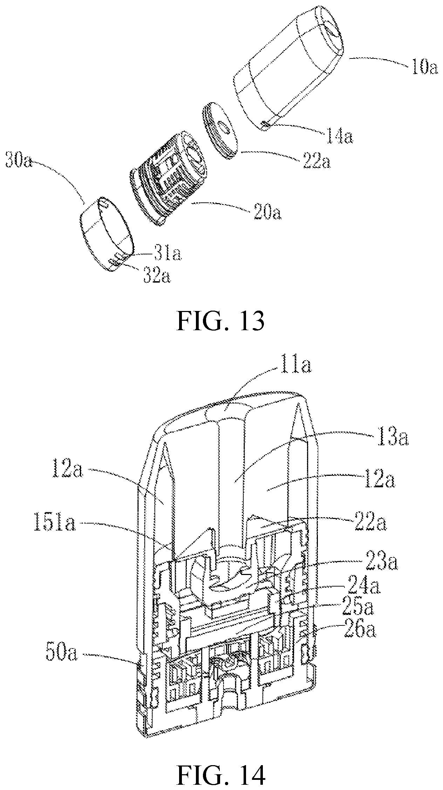

In Embodiment 2, FIG. 12 and FIG. 13 show a schematic three-dimensional diagram in a direction and a schematic exploded diagram from a perspective of an atomization device 200 according to another embodiment of the present invention. The atomization device 200 includes a liquid storage device 10a, an atomization assembly 20a, and a bottom cover 30a, the liquid storage device 10a includes a vent hole 11a, a liquid storage cavity 12a, and an air conduit 13a that are the same as those in Embodiment 1, an end of the liquid storage device 10a opposite to a vent hole 111a of the liquid storage device is open, and the atomization assembly 20a may be mounted in the liquid storage device 10a through the open end of the liquid storage device 10a.

A shell of the bottom cover 30a is provided with a first snap-fit position 31a and a second snap-fit position 32a, and a shell of the liquid storage device 10a is provided with a snap-fit member 14a matching the first snap-fit position 31a and the second snap-fit position 32a. When the snap-fit member 14a is in snap-fit connection to the first snap-fit position 31a, the bottom cover 30a and the liquid storage device 10a are mutually assembled in the first assembly position. In this case, the bottom cover 30a and the liquid storage device 10a still maintain a gap 50a between them and are not completely tightly bound to each other, as shown in FIG. 13. When the bottom cover 30a is further pushed to cause the snap-fit member 14a to be in snap-fit connection to the second snap-fit position 32a, the bottom cover 30a and the liquid storage device 10a are mutually assembled in the second assembly position. In this case, the bottom cover 60 is tightly bound to the liquid storage device 40, as shown in FIG. 14. As described in Embodiment 1, the arrangement positions of the first snap-fit position 31a, the second snap-fit position 32a, and the matching snap-fit member 14a are interchangeable, and similarly another fixed connection manner well-known by a person skilled in the art may be adopted. In this embodiment, the atomization assembly 20a is connected to the liquid storage device 10a in both the first assembly position and the second assembly position.

Continue to refer to FIG. 13. The atomization assembly 20a includes a support 23a, a third seal 24a, an atomization core 25a, and a base 26a. Except that a second liquid guide hole 231a of the support 23a is not provided with a pressing member 233, arrangement and assembly manners of the support 23a, the third seal 24a, the atomization core 25a, and the base 26a in Embodiment 2 are the same as those of the support 23, the third seal 24, the atomization core 25, and the base 26 in Embodiment 1, and details are not described herein again.

To seal a liquid storage cavity 12a, the atomization assembly 20a further includes a flexible sealing element 22a, the flexible sealing element 22a is arranged between the liquid storage cavity 12a and the support 23a, and has an outline matching the cross section of the inner contour of the liquid storage device 10a, thereby sealing the liquid storage cavity 12a to prevent liquid from leaking out from the liquid storage cavity 12a. Specifically, in this embodiment, the flexible sealing element 22a is nested on the top of the support 23a, so that the support 23a provides rigid support for the flexible sealing element. In this case, the flexible sealing element 23a blocks a conduction path between the second liquid guide hole 231a of 23a and the liquid storage cavity 12a, so that the liquid in the liquid storage cavity 12a cannot flow towards the atomization assembly 20a. In the first assembly position, the flexible sealing element 22a seals the liquid storage cavity. In the second assembly position, the flexible sealing element 22a is broken, the liquid in the liquid storage cavity 12a can flow towards the atomization assembly 20a for atomization. To cause the aerosol to circulate to the vent hole 11a of the liquid storage device after being generated by the atomization assembly 20a, the flexible sealing element 22a is further provided with a ventilation hole 221a, and the air conduit 13a is connected to the ventilation hole 221a.

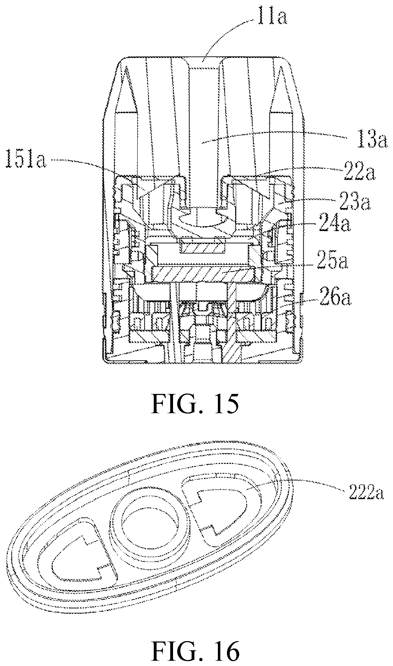

Further, refer to FIG. 15. To break the flexible sealing element 22a in the second assembly position, a weak area 222a that can be pressed and is easily broken is formed on the flexible sealing element 22a, the weak area 222a is defined by a groove formed on the flexible sealing element 22a, and the groove may be set into various shapes by a person skilled in the art according to specific scenarios. In this embodiment, the shape of the groove is preferably set to a ring shape. Compared with other parts of the flexible sealing element 22a, the weak area 222a has a very small thickness, and this thickness facilitates breaking of the weak area, and is, for example, approximately 0.1 mm. In the second assembly position, the weak area 222a can be broken to conduct a circulation path between the second liquid guide hole 231a of the support 23a and the liquid storage cavity 12a, so that the liquid in the liquid storage cavity 12a may flow towards the atomization core 25a of the atomization assembly 20a through the second liquid guide hole 231a of the support 23a.

Further, continue to refer to FIG. 16 with reference to FIG. 14. To collaboratively enable the flexible sealing element 22a to be broken in the second assembly position, a pressing member 15a extending along the length direction of the liquid storage cavity 12 is collaboratively arranged in the liquid storage device 10a, the pressing member 15a extends into the liquid storage cavity 12a, is used for releasing sealing of the sealing element 22a for the liquid storage cavity 12a, may be in a shape of a sheet or pole, and has a free end facing the open end of the liquid storage device 10a, and the free end is configured as a pressing end 151a used for pressing the seal. To cause the pressing member 15a to have sufficient strength, to enable the pressing end 151a to press and break the flexible sealing element 22, the pressing member 15a is at least partially connected to the air conduit 13a of the liquid storage device 10a.

With reference to the foregoing structural description, during production, the bottom cover 30a equipped with the atomization assembly 20a may be first pressed from the open end of the liquid storage device 10a, until the first snap-fit position 31a on the bottom cover 30a is in snap-fit connection to the snap-fit member 14a of the liquid storage device 10a In this case, the bottom cover 30a and the liquid storage device 10a still maintain a specific distance 50a between them and are not completely tightly bound to each other. In addition, the weak area 222a of the flexible sealing element 22a abuts against the pressing end 151a, but the weak area 222a has not been broken, the liquid storage cavity 12a and the second liquid guide hole 231a of the support 23a are still in an isolated or sealed state between each other, and this state is the pre-assembly state in the foregoing embodiment.

During use of the user, the user may further press the bottom cover 30a toward the open end of the liquid storage device 10a. In this case, the bottom cover 30a drives the atomization assembly 20a to further move toward the inside of the liquid storage device 10a, until the second snap-fit position 32a on the bottom cover 30a is in snap-fit connection to the snap-fit member 14a of the liquid storage device 10a. In this process, the weak area 222a of the sealing element 22a is further pressed by the pressing end 151a, so that the weak area 222a is broken under pressing of the pressing end 151a. Therefore, the liquid storage cavity 12a and the second liquid guide hole 231a of the support 23a are conducted between each other, and the liquid matrix may flow from the liquid storage cavity 12a towards the atomization assembly 20a for atomization.

It may be understood that because the sealing element 22a in this embodiment is made of a flexible material, for example, may be made of a silicone material in this embodiment, the pressing end 151a may be preferably configured into a spike shape. When the sealing element 22a further moves from the first assembly position to the second assembly position with the bottom cover 30a, the pressing end 151a in the spike shape pierces the weak area 222a of the flexible sealing element 22a at a point. Because the flexible sealing element 22a has a specific elastic force, the weak area 222a shrinks to the vicinity quickly with the piercing point as the center under the elastic force, thereby expanding the breaking range. In this manner, the weak area 222a does not fall into the atomization assembly 20 to form fixed residues because of being broken under pressing of the pressing end 151a.

In some embodiments, the sealing element 22a may alternatively be made of a rigid plastic material. In this case, the weak area 222a is also made of a rigid plastic material. When the sealing element 22a further moves from the first assembly position to the second assembly position with the bottom cover 30a, the pressing end 151a presses the weak area 222a. Because the weak area 222a is made of a rigid plastic material, the weak area 222a is under a pressing force of the pressing end 151a, and at least one part of the weak area 222a is broken. Therefore, the liquid storage cavity 12a and the second liquid guide hole 231a of the support 23a can also be conducted between each other.

The present invention further provides an electronic atomization apparatus. The electronic atomization apparatus includes the foregoing atomization device and a power supply mechanism (not shown), and the atomization device is detachably connected to or fixedly connected to the power supply mechanism. The power supply mechanism includes a cell (not shown), a control board (not shown), and a fixed base (not shown). The control board is fixed onto the fixed base, the fixed base is provided with a first elastic sheet (not shown) and a second elastic sheet (not shown), and the first elastic sheet and the second elastic sheet are electrically connected to the control board, and are electrically connected to the cell through the control board. When the atomization device is detachably connected to the power supply mechanism, the power supply mechanism is provided with an accommodating cavity (not shown) matching an overall shape of the atomization device. When the atomization device is accommodated in the accommodating cavity, a first electrode contact 22a and a second electrode contact 22b of the atomization device abut against the first elastic sheet and the second elastic sheet of the power supply mechanism respectively, to help the power supply mechanism supply power to the atomization device.

Finally, it should be noted that the foregoing embodiments are merely used for describing the technical solutions of the present invention, but are not intended to limit the present invention. Under the ideas of the present invention, the technical features in the foregoing embodiments or different embodiments may also be combined, the steps may be performed in any order, and many other changes of different aspects of the present invention also exists as described above, and these changes are not provided in detail for simplicity. Although the present invention is described in detail with reference to the foregoing embodiments, it should be appreciated by a person skilled in the art that, modifications may still be made to the technical solutions described in the foregoing embodiments, or equivalent replacements may be made to the part of the technical features; and these modifications or replacements will not cause the essence of corresponding technical solutions to depart from the scope of the technical solutions in the embodiments of the present invention.

## Claims

1. An atomization device, comprising:
a liquid storage device, wherein the liquid storage device has a liquid storage cavity used for storing a liquid matrix and a liquid outlet allowing the liquid matrix to flow out, the liquid storage device comprises a first seal, and the first seal is used for sealing the liquid outlet; and
an atomization assembly, which is detachably connected to the liquid storage device, wherein the atomization assembly comprises a support, an atomization core, and a second seal supported on the support, and the atomization core is used for atomizing the liquid matrix to generate an aerosol; and
the support is provided with a liquid inlet for allowing the liquid matrix to flow towards the atomization core and provided with a pressing member adjacent to the liquid inlet, the pressing member is configured to be able to press the first seal to break or release the first seal, to enable the liquid matrix to flow from the liquid outlet to the liquid inlet, and the second seal is used for sealing a joint between the liquid outlet and the liquid inlet during the pressing of the first seal by the pressing member.

2. The atomization device according to claim 1, wherein at least one part of the second seal is configured to surround the pressing member.

3. The atomization device according to claim 1, wherein a first liquid guide hole used for connecting the liquid outlet to the liquid inlet is defined on the second seal, and a hole wall of the first liquid guide hole surrounds the pressing member.

4. The atomization device according to claim 1, wherein the liquid inlet comprises at least one second liquid guide hole defined and formed on the support, and the pressing member is at least partially positioned in the second liquid guide hole.

5. The atomization device according to claim 4, wherein the pressing member at least partially extends in the second liquid guide hole toward the liquid storage device.

6. The atomization device according to claim 4, wherein the pressing member is at least partially bound to an inner wall of the second liquid guide hole.

7. The atomization device according to claim 4, wherein a circulation path of the liquid matrix is defined and formed between the pressing member and an inner wall of the second liquid guide hole.

8. The atomization device according to claim 1, wherein the liquid inlet comprises at least one second liquid guide hole, and the second liquid guide hole is defined in the pressing member to form a circulation path of the liquid matrix.

9. The atomization device according to claim 1, wherein an accommodating cavity is defined on the support, the liquid inlet is connected to the accommodating cavity, and the atomization core is at least partially accommodated in the accommodating cavity.

10. The atomization device according to claim 1, wherein the atomization core comprises a porous body and a heating element, the heating element is bound to the porous body, the porous body is used for absorbing the liquid matrix, and the heating element is used for heating the liquid matrix to generate the aerosol.

11. The atomization device according to claim 1, wherein the liquid storage device comprises a connection end arranged opposite to the atomization assembly, and at least one liquid outlet pipe for forming the liquid outlet extends from an end face of the connection end.

12. The atomization device according to claim 11, wherein the first seal comprises a thin film used for sealing a port of the liquid outlet pipe.

13. The atomization device according to claim 11, wherein the first seal comprises a plug at least partially accommodated in the liquid outlet pipe.

14. The atomization device according to claim 11, wherein the liquid outlet pipe is used for being able to be inserted into the liquid inlet and being able to accommodate at least one part of the pressing member when the liquid storage device is connected to the atomization assembly.

15. The atomization device according to claim 11, wherein the liquid storage device further comprises an air conduit that extends from the end face of the connection end and that is used for guiding the aerosol to flow through.

16. The atomization device according to claim 11, wherein a first liquid guide hole used for connecting the liquid outlet to the liquid inlet is defined on the second seal, a hole diameter of the first liquid guide hole is less than a pipe diameter of the liquid outlet pipe, and the second seal is flexible.

17. The atomization device according to claim 1, wherein the first seal has a first position and a second position relative to the atomization assembly;
when the first seal is in the first position, the first seal seals the liquid outlet; and
when the first seal is in the second position, the pressing member presses the first seal, to break or release the first seal and then cause the liquid matrix to flow from the liquid outlet towards the liquid inlet.

18. A liquid storage device, adapted to be detachably connected to an atomization assembly, wherein the liquid storage device comprises a liquid storage cavity used for storing a liquid matrix and a connection end arranged opposite to the atomization assembly, at least one liquid outlet pipe extends from an end face of the connection end, the liquid outlet pipe has a liquid outlet used for allowing the liquid matrix to flow out, and the liquid storage device further comprises a first seal used for sealing the liquid outlet; and
the first seal is configured to be able to be pressed by a part of the atomization assembly and be broken or released, and then the liquid matrix is caused to flow out from the liquid outlet.

19. An atomization assembly, adapted to be detachably connected to a liquid storage device, wherein the liquid storage device is provided with a liquid storage cavity used for storing a liquid matrix, and the liquid storage device further comprises a liquid outlet for allowing the liquid matrix to flow out of the liquid storage cavity, and a first seal for sealing the liquid outlet, wherein the atomization assembly comprises a support, an atomization core, and a second seal supported on the support, and the atomization core is used for atomizing the liquid matrix from the liquid storage device to generate an aerosol; and
the support is provided with a liquid inlet for allowing the liquid matrix to flow towards the atomization core and provided with a pressing member adjacent to the liquid inlet, the pressing member is configured to be able to press the first seal to break or release the first seal, to enable the liquid matrix to flow from the liquid outlet to the liquid inlet, and the second seal is used for sealing a joint between the liquid outlet and the liquid inlet during the pressing of the first seal by the pressing member.
